# EUROPÄISCHE PATENTSCHRIFT

(11) **EP 0 793 849 B1**
(45) Veröffentlichungstag und Bekanntmachung des Hinweises auf die Patenterteilung: **13.05.1998**
(21) Anmeldenummer: 95936941.4
(22) Anmeldetag: 20.11.1995
(51) Int. Cl.: G21C 7/08

(54) **SCHNELLABSCHALTSYSTEM UND VERFAHREN ZUR SCHNELLABSCHALTUNG EINES KERNREAKTORS**
FAST SHUTDOWN SYSTEM AND PROCESS FOR THE FAST SHUTDOWN OF A NUCLEAR REACTOR
SYSTEME ET PROCEDE D'ARRET RAPIDE D'UN REACTEUR NUCLEAIRE

(30) Priorität: 23.11.1994 DE 4441751
(43) Veröffentlichungstag der Anmeldung: 10.09.1997
(73) Patentinhaber: SIEMENS AKTIENGESELLSCHAFT, 80333 München (DE)
(72) Erfinder: SCHULZE, Joachim, D-60598 Frankfurt (DE)
(86) Internationale Anmeldenummer: DE9501611
(87) Internationale Veröffentlichungsnummer: WO9616411

(56) Entgegenhaltungen:
- EP-A- 0 103 249
- CH-A- 501 296
- DE-A- 3 316 037
- FR-A- 2 345 791
- FR-A- 2 409 578
- DATABASE WPI Week 8525 Derwent Publications Ltd., London, GB; AN 85-150043 & JP,A,60 082 994 (HITACHI) , 11.Mai 1985

## Beschreibung

Die Erfindung betrifft ein Schnellabschaltsystem eines Kernreaktors, welcher einen Reaktorkern und eine Mehrzahl von Steuerstäben hat, die nebeneinander angeordnet und in den Reaktorkern ein- und aus dem Reaktorkern ausfahrbar sind, sowie ein Verfahren zur Schnellabschaltung eines Kernreaktors.

Bei einem Kernreaktor, insbesondere einem Siedewasser- oder Druckwasserreaktor, findet eine Regulierung der nuklearen Kettenreaktion vor allem durch sogenannnte Steuerstäbe statt, die in einzelne Brennelemente oder zwischen diese eingefahren werden und Neutronen absorbieren. Die Steuerstäbe werden sowohl zur Leistungsregulierung des Kernreaktors, beispielsweise beim Anfahren sowie während eines normalen Betriebes, als auch für eine Schnellabschaltung des Kernreaktors im Falle einer Störung verwendet.

Bei einem Druckwasserreaktor werden die Steuerstäbe von oben in die Brennelemente eingefahren. Während eines normalen Betriebes des Kernreaktors sind die Steuerstäbe überwiegend aus den Brennelementen herausgefahren und durch entsprechende Vorrichtungen, beispielsweise magnetische Klinken, gehaltert. Bei einer Störfallsituation werden diese Vorrichtungen gelöst, und die Steuerstäbe fallen aufgrund ihres Gewichtes in die Brennelemente ein. Eventuell verklemmte Steuerstäbe können über eine Hydraulik, einen elektrischen Spindelantrieb oder dergleichen, gegebenenfalls nachträglich in die Brennelemente eingeführt werden.

Bei einem Siedewasserreaktor sind die Steuerstäbe in der Regel von unten in den Reaktorkern eingeführt. Eine Schnellabschaltung eines Siedewasserreaktors erfolgt beispielsweise über einen hydraulischen Antrieb, durch den die Steuerstäbe zwischen die Brennelemente des Reaktorkerns eingeschossen werden. Bekannt ist es, für eine hydraulische Schnellabschaltung die Steuerstäbe an zwei voneinander getrennte Ringleitungen anzuschließen, wobei aus Sicherheitsgründen, insbesondere wegen einer üblichen Forderung nach einer Ausführung mit Redundanz, jeder Steuerstab an jede der beiden Ringleitungen angeschlossen ist. Bei Ausfall einer Ringleitung erfolgt zumindest über die verbleibende Ringleitung ein Einfahren der Steuerstäbe. Um dies zu gewährleisten, sind die Ringleitungen an jedem Steuerstabantrieb durch ein spezielles Ventil voneinander entkoppelt. Dieses Ventil gewährleistet, daß bei Ausfall einer Ringleitung kein Hydraulikfluid der funktionsfähigen Ringleitung in die ausgefallene Ringleitung gelangt und dadurch das Einfahren des Steuerstabs verhindert könnte. Ein solches Ventil ist nicht nur aufwendig herzustellen und regelmäßig zu überprüfen, sondern bedingt auch eine Kopplung der an sich redundant ausgeführten Ringleitungen. Bei einem Versagen mehrerer solcher Ventile würde somit die Redundanz entfallen.

Die CH-A-634 943 beschreibt einen gasgekühlten graphitmoderierten Kernreaktor mit zwei voneinander unabhängigen Abschaltsystemen. Zur Abschaltung und Regelung des Kernreaktors dienen in den Kern einfahrbare Absorberstäbe. Diese sind zwei verschiedenen Abschaltsystemen zugeordnet, die unabhänqig voneinander arbeiten. Das erste Abschaltsystem ist für die Voll- oder Langzeitabschaltung vorgesehen, während das zweite zur Teil- oder Schnellabschaltung dient. Die Absorberstäbe des zweiten Abschaltsystems befinden sich zwischen den Absorberstäben des ersten Abschaltsystems.

In der DE-A-33 16 037 ist ein Verfahren zum Betreiben einer Kernkraftwerksanlage, insbesondere eines Siedewasserreaktors, beschrieben. Der Siedewasserreaktor verfügt über eine Vielzahl von Steuerstäben zum Steuern der Leistungsabgabe, welche Steuerstäbe sowohl in den Kern einfahrbar als auch aus dem Kern heraus ziehbar angeordnet sind. Hierbei sind die zum Betrieb des Siedewasserreaktor verwendeten Steuerstäbe im äußeren Umfangsbereich des Kerns angeordnet und bilden eine erste Gruppe. Alle anderen Steuerstäbe bilden eine zweite Gruppe, wobei während des normalen Betriebes des Reaktors einige der Steuerstäbe der zweiten Gruppe zumindest teilweise in den Kern eingefahren und alle anderen Steuerstäbe aus dem Kern zurückgezogen sind. Bei einer außerhalb des Reaktors festgelegten eine Leistungsreduzierung des Reaktors erforderliche Störung bleiben die in den Kern eingefahrenen Steuerstäbe der zweiten Gruppe in den Kern eingefahren und weitere ausgewählte Steuerstäbe der zweiten Gruppe sowie die Steuerstäbe der ersten Gruppe werden einem Schnellabschaltvorgang unterworfen und so schnell in den Kern eingefahren, daß die Leistung des Reaktors auf einen Wert geringer als bei normalen Betrieb, aber ausreichend für den Eigenbedarf der Kernkraftwerksanlage reduziert wird. Der Reaktor wird somit weiterhin mit der reduzierten Leistung betrieben. Die ausgewählten Steuerstäbe der zweiten Gruppe sind dabei so gewählt, daß sie nicht benachbart zueinander liegen.

Die US-A-4,632,803 betrifft ein Verfahren zur Steuerung eines Siedewasserreaktors, dessen thermische Leistung durch in den Kern einfahrbare und aus dem Kern rückziehbare Steuerstäbe sowie durch eine Steuerung einer Umwälzpumpe zur Umwälzung von Kühlmittel durch den Reaktorkern hindurch gesteuert wird. Bei einer Abschaltung der Umwälzpumpe, welche eine Reduzierung des Kühlmitteldurchsatzes durch den Reaktorkern bedingt, wird die Stellung der einzelnen Steuerstäbe, d.h. der Grad inwieweit sie in den Reaktorkern eingefahren sind, so geändert, daß eine Schnellabschaltung des Siedewasserreaktors unnötig wird. Hierbei werden Steuerstäbe, die mit einer geringen Tiefe in den Reaktorkern eingefahren waren, bis zu etwa der halben Höhe des Reaktorkerns in diesen eingefahren. Zusätzlich werden Steuerstäbe, die weit über die halbe Höhe des Reaktorkerns in diesen hineingefahren waren, ungefähr auf die halbe Höhe herausgezogen oder die Steuerstäbe, welche überhaupt nicht in den Reaktorkern eingefahren waren, werden ungefähr auf die Hälfte der Höhe des Reaktorkerns eingefahren.

Aufgabe der Erfindung ist es daher, ein Schnellabschaltsystem mit Redundanz anzugeben, welches selbst bei teilweisem Ausfall eine Schnellabschaltung mit ausreichender Sicherheit gewährleistet. Eine weitere Aufgabe der Erfindung besteht darin, ein Verfahren mit Redundanz zur Schnellabschaltung eines Kernreaktors, insbesondere eines Siedewasserreaktors, anzugeben.

Erfindungsgemäß wird die erstgenannte Aufgabe gelöst durch ein Schnellabschaltsystem eines Kernreaktors, welcher einen Reaktorkern und eine Mehrzahl von Steuerstäben hat, die nebeneinander angeordnet und in den Reaktorkern ein- und aus dem Reaktorkern ausfahrbar sind, wobei
a) die Mehrzahl von Steuerstäben eine Anzahl von Fahrgruppen hat, in die die Steuerstäbe für eine Leistungsregulierung des Kernreaktors eingeordnet sind,
b) die Mehrzahl von Steuerstäben eine Anzahl von Abschaltgruppen hat, in die die Steuerstäbe für eine Schnellabschaltung des Kernreaktors eingeordnet sind und
c) jeder Abschaltgruppe Steuerstäbe von mindestens zwei Fahrgruppen oder jeder Fahrgruppe Steuerstäbe von mindestens zwei Abschaltgruppen zugeordnet sind.

Durch eine solche Einteilung der Steuerstäbe in eine Anzahl von redundanten Abschaltgruppen und eine Anzahl von Fahrgruppen ist in jedem Leistungszustand des Kernreaktors, insbesondere bei einem Aufheizvorgang sowie bei Vollastbetrieb, gewährleistet, daß auch bei einer Schnellabschaltung mit Versagen des Einfahrens von Steuerstäben einer Abschaltgruppe ausreichend viele Steuerstäbe in den Reaktorkern eingefahren werden, so daß eine Unterkritikalität der Kernreaktors für eine Mindestzeitdauer, zumindest aber eine Leistungsreduktion auf eine geringfügige Restleistung, gewährleistet ist. Da bei einem Anfahren des Reaktors, d.h. im sogenannten Aufheizvorgang, die Steuerstäbe nach vorgegebenen, betriebsbedingten Fahrfolgen aus dem Reaktorkern nacheinander herausgefahren werden, könnten bei einer identischen Einteilung der Steuerstäbe in Fahrgruppen und Abschaltgruppen sämtliche bereits ausgefahrenen Steuerstäbe im Versagensfalle ggf. nicht wieder eingefahren werden.

Diese Problematik wird ebenfalls durch die Verteilung der Steuerstäbe jeder Abschaltgruppe auf mindestens zwei Fahrgruppen bzw. der Steuerstäbe jeder Fahrgruppe auf mindestens zwei Abschaltgruppen sicher verhindert, so daß das Schnellabschaltsystem mit Redundanz ausgeführt ist. Somit wird selbst beim Anfahren des Kernreaktors ein Teil der schon herausgefahrenen Steuerstäbe bei einer Schnellabschaltung mit Versagen des Einfahrens von Steuerstäben einer Abschaltgruppe, d.h. im Versagensfalle, wieder in den Reaktorkern eingefahren.

Vorzugsweise hat das Schnellabschaltsystem zumindest zwei voneinander unabhängige Einfahrsysteme zum Einfahren der Steuerstäbe in den Reaktorkern, wobei die Steuerstäbe einer Abschaltgruppe nur mit einem der beiden Einfahrsysteme verbunden sind. Durch Verwendung zweier voneinander unabhängiger Einfahrsysteme und einer strikten Trennung der den jeweiligen Einfahrsystemen zugeordneten Abschaltgruppen ist das Schnellabschaltsystem redundant ausgeführt. Eine Wechselwirkung zwischen den beiden Einfahrsystemen ist somit prinzipiell ausgeschlossen.

Das Schnellabschaltsystem weist vorzugsweise zwei Fahrgruppen auf, deren Steuerstäbe schachbrettartig zueinander angeordnet sind. Steuerstäbe der Fahrgruppen können gemäß der betriebsbedingten Fahrfolgen in Untergruppen aus dem Reaktorkern heraus- bzw. wieder in den Reaktorkern hineingefahren werden. Sind die Steuerstäbe einer der beiden Fahrgruppen vollständig herausgefahren, so ist durch die Zuordnung der Steuerstäbe zu unterschiedlichen Abschaltgruppen gewährleistet, daß auch im Versagensfalle zumindest ein Teil der herausgefahrenen Steuerstäbe bei einer Schnellabschaltung wieder eingefahren wird.

Das Schnellabschaltsystem weist bevorzugt eine Einteilung der Steuerstäbe in zwei Abschaltgruppen auf. Jede der Abschaltgruppen kann dabei über ein getrenntes Einfahrsystem unabhängig voneinander in den Reaktorkern eingefahren werden. Da die zwei Abschaltgruppen auf keinen Fall identisch mit zwei Fahrgruppen sind, ist das Schnellabschaltsystem redundant ausgeführt und bei einer Schnellabschaltung werden hinreichend viele Steuerstäbe in den Reaktorkern wieder eingefahren, um eine Unterkritikalität des Kernreaktors zu erreichen.

Bevorzugt sind jeder Abschaltgruppe in etwa gleich viele Steuerstäbe zugeordnet. Bei einer Einteilung der Steuerstäbe in genau zwei Abschaltgruppen erfolgt die Aufteilung der Steuerstäbe in etwa hälftig auf jede der Abschaltgruppen. Sind die Steuerstäbe in genau zwei Fahrgruppen, die schachbrettartig zueinander angeordnet sind, aufgeteilt, so enthält jede Abschaltgruppe in etwa zur Hälfte Steuerstäbe der jeweiligen Fahrgruppen. Somit werden die Steuerstäbe jeder Fahrgruppe jeweils in etwa zur Hälfte der einen Abschaltgruppe und der anderen Abschaltgruppe zugeordnet. Dadurch wird bei einer Schnellabschaltung selbst bei Ausfall einer der Abschaltgruppen zumindest die Hälfte der ausgefahrenen Steuerstäbe jeder Fahrgruppe in den Reaktorkern wieder eingeführt.

Vorzugsweise enthält das Schnellabschaltsystem zwei Abschaltgruppen, in denen die Steuerstäbe jeweils zu Paaren geordnet und in etwa schachbrettartig zueinander angeordnet sind. Man erhält somit für die den Abschaltgruppen zugeordneten Steuerstäbe ein Schachbrettmuster aus Paaren von Steuerstäben. Bei einem Schachbrettmuster aus einzelnen Steuerstäben der Fahrgruppen umfaßt somit jedes Paar einer Abschaltgruppe einen Steuerstab einer ersten Fahrgruppe und einen Steuerstab einer zweiten Fahrgruppe.

Die Steuerstäbe jeder Abschaltgruppe sind vorzugsweise weitgehend gleichmäßig über den Querschnitt des Reaktorkerns verteilt. Hierdurch wird bei einer Schnellabschaltung mit Versagen des Einfahrens von Steuerstäben einer Abschaltgruppe eine gleichmäßige Unterbindung der nuklearen Kettenreaktion über den Querschnitt des Reaktorkerns gewährleistet.

Die auf ein Verfahren gerichtete Aufgabe wird durch ein Verfahren zur Schnellabschaltung eines Kernreaktors gelöst, wobei der Kernreaktor einen Reaktorkern und eine Mehrzahl von Steuerstäben hat, die nebeneinander angeordnet und in eine Anzahl von Fahrgruppen aufgeteilt sind, gemäß derer während eines normalen Betriebs des Kernreaktors die Steuerstäbe aus dem Reaktorkern heraus- und in den Reaktorkern hineingefahren werden und bei dem in einer Störfallsituation zumindest zwei voneinander unabhängige Einfahrsysteme zum Einfahren der Steuerstäbe aktiviert werden, welche Steuerstäbe in eine Anzahl von Abschaltgruppen eingeordnet sind und jede Abschaltgruppe Steuerstäbe aus mindestens zwei Fahrgruppen hat sowie mit einem einzigen Einfahrsystem verbunden ist. Durch die voneinander unabhängigen Einfahrsysteme und einer Verbindung der Abschaltgruppen mit jeweils nur einem Einfahrsystem erfolgt bei einer Schnellabschaltung das Einfahren der Steuerstäbe verschiedener Abschaltgruppen völlig unabhängig voneinander. Eine Beeinflussung der Einfahrsysteme untereinander bleibt ausgeschlossen, so daß ein redundantes Verfahren gegeben ist. Eine mit dem Verfahren durchgeführte Schnellabschaltung führt zu einer Unterkritikalität des Kernreaktors oder zumindest zu einer Leistungsreduktion auf eine geringfügige Restleistung. Gegebenenfalls können zusätzliche Maßnahmen zur Erzielung einer dauerhaften Unterkritikalität, wie beispielsweise eine Boreinspeisung oder ein nachträgliches mechanisches Einfahren von Steuerstäben, erfolgen.

In der Zeichnung werden das Schnellabschaltsystem sowie das Verfahren zur Schnellabschaltung eines Kernreaktors weiter erläutert. Es zeigen:
- FIG 1: einen Langsschnitt durch einen Kernreaktor mit einem Schnellabschaltsystem und
- FIG 2: einen Querschnitt durch den Reaktorkern des Kernreaktors.

In den Figuren sind jeweils nur die für die Erläuterung wesentlichen Komponenten dargestellt.

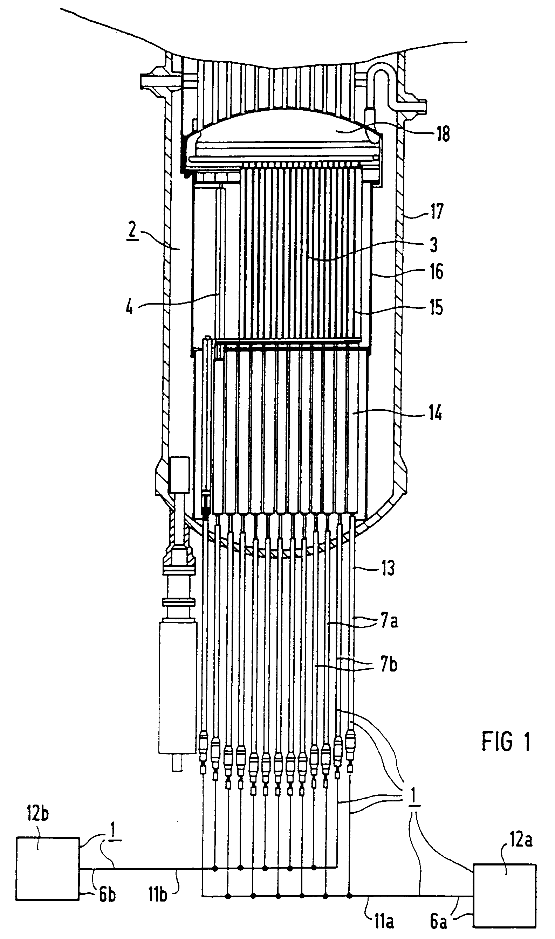

In FIG 1 ist in einem Längsschnitt ein Kernreaktor 2 mit einem Druckbehälter 17 und einem Schnellabschaltsystem 1 dargestellt. Innerhalb des Druckbehälters 17 ist der Reaktorkern 3 angeordnet, in welchem sich Brennelemente 15 befinden und welcher von einen Kernmantel 16 umgeben ist. Der Kernmantel 16 hat einem Kerndeckel 18, unterhalb dessen die Brennelemente 15 angeordnet sind. Unterhalb der Brennelemente 15 schließen sich unmittelbar Steuerstabführungsrohre 14 zur Führung von Steuerstäben 4 an, so daß die Steuerstäbe 4 zwischen die Brennelemente 15 hinein- und herausgefahren werden können. Die Steuerstabführungsrohre 14 gehen jeweils auf ihrer den Brennelementen 15 gegenüberliegenden Seite in Steuerstabantriebe 13 über, welche druckdicht aus dem Druckbehälter 17 herausgeführt sind. Die Steuerstäbe 4 mit ihren zugehörigen Steuerstabantrieben 13 sind in eine erste Abschaltgruppe 7a und eine zweite Abschaltgruppe 7b eingeordnet. Die Steuerstabantriebe 13 der ersten Abschaltgruppe 7a sind mit einer ersten Ringleitung 11a verbunden, welche an einen ersten hydraulischen Druckspeicher 12a zum Einfahren der Steuerstäbe 4 in den Reaktorkern 3 angeschlossen sind. Die erste Ringleitung 11a, der erste hydraulische Druckspeicher 12a sowie die zugeordneten Steuerstabantriebe 13 sind Bestandteil eines ersten Einfahrsystems 6a. Ein zweites Einfahrsystem 6b umfaßt eine zweite Ringleitung 11b, die mit einem zweiten hydraulischen Druckspeicher 12b verbunden ist, sowie entsprechend zugeordnete Steuerstabantriebe 13. Das zweite Einfahrsystem 6b wirkt auf die zweite Abschaltgruppe 7b der Steuerstäbe 4. Das Schnellabschaltsystem 1 gewährleistet durch seine zweiteilige redundante Ausführung, daß bei einer Schnellabschaltung des Kernreaktors 2, auch bei einem Versagen des Einfahrens von Steuerstäben 4 einer Abschaltgruppe 7a,7b, etwa 50 % der ausgefahrenen Steuerstäbe 4 in den Reaktorkern 3 eingefahren werden und dadurch eine Unterkritikalität des Kernreaktors 2 für eine Mindestdauer oder zumindest eine Leistungsreduktion auf eine geringfügige Restleistung erreicht wird.

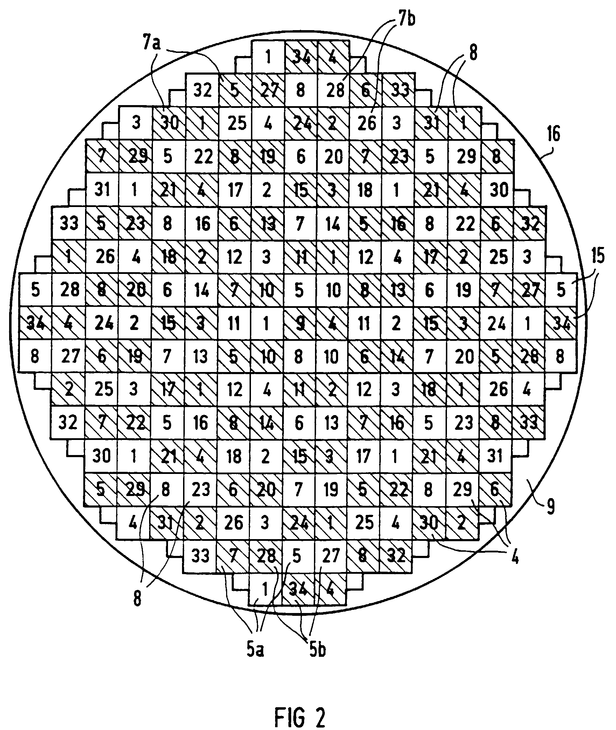

Anhand von FIG 2 ist eine Einteilung der Steuerstäbe 4 in eine erste Fahrgruppe 5a und eine zweite Fahrgruppe 5b sowie in die erste Abschaltgruppe 7a und die zweite Abschaltgruppe 7b dargestellt. FIG 2 zeigt hierzu einen Querschnitt 9 des Reaktorkerns 3. Die einzelnen Steuerstäbe 4 sind der Übersichtlichkeit halber nicht dargestellt. Vielmehr sind die Steuerstäbe 4 der Fahrgruppen 5a,5b mit jeweiligen Zahlen symbolisch dargestellt. Mit den Zahlen 1-8 sind Steuerstäbe der ersten Fahrgruppe 5a und mit den Zahlen 9-34 Steuerstäbe 4 der zweiten Fahrgruppe 5b symbolisiert. Die Steuerstäbe 4 der beiden Fahrgruppen 5a,5b sind schachbrettartig zueinander angeordnet. Eine Einteilung der Steuerstäbe 4 in die beiden Abschaltgruppen 7a,7b erfolgt in Paaren 8 von Steuerstäben 4. Die schraffiert unterlegten Paare 8 sind der ersten Abschaltgruppe 7a und die nicht unterlegten Paare 8 der zweiten Abschaltgruppe 7b zugeordnet. Die Paare 8 der beiden Abschaltgruppen 7a,7b sind ebenfalls schachbrettartig angeordnet, so daß jedes Paar 8 einen Steuerstab 4 der ersten Fahrgruppe 5a und einen Steuerstab 4 der zweiten Fahrgruppe 5b enthält. Die Steuerstäbe 4 sind in etwa zur Hälfte jeweils den beiden Abschaltgruppen 7a,7b zugeordnet. Die Steuerstäbe 4 jeder Abschaltgruppe 7a,7b sind zudem weitgehend gleichmäßig über dem Querschnitt 9 angeordnet. Während eines normalen Betriebes des Kernreaktors 2 werden die Steuerstäbe 4 gemäß vorgegebener Fahrfolgen bewegt. Vor einem Anfahren sind sämtliche Steuerstäbe 4 anfangs in den Reaktorkern 3 eingefahren. Zum Erreichen der Kritikalität und für den anschließenden Aufheizvorgang werden zuerst die Steuerstäbe 4 der ersten Fahrgruppe 5a nacheinander in der Fahrfolge 1,2,3,...,8 aus dem Reaktorkern 3 herausgefahren. Durch die paarweise Zuordnung der Steuerstäbe 4 zur ersten Abschaltgruppe 7a und zur zweiten Abschaltgruppe 7b ist selbst während eines Aufheizvorganges des Kernreaktors 2 gewährleistet, daß etwa 50 % der bereits ausgefahrenen Steuerstäbe 4 bei einer Schnellabschaltung wieder in den Reaktorkern 3 eingefahren werden können, sellbst bei einem Versagen des Einfahrens von Steuerstäben 4 einer Abschaltgruppe 7a,7b.

Die Erfindung zeichnet sich durch ein Schnellabschaltsystem mit Redundanz für einen Kernreaktor, insbesondere einen Siedewasserreaktor, aus. In dem Schnellabschaltsystem sind die Steuerstäbe jeweils auf mindestens zwei Fahrgruppen sowie auf mindestens zwei Abschaltgruppen aufgeteilt. Die Aufteilung erfolgt dabei so, daß jeder Abschaltgruppe Steuerstäbe aus mindestens zwei Fahrgruppen und/oder jeder Fahrgruppe Steuerstäbe aus mindestens zwei Abschaltgruppen zugeordnet sind. Dadurch ist gewährleistet, daß selbst bei einem Aufheizvorgang des Kernreaktors, bei dem nur ein Teil der Steuerstäbe herausgefahren sind, zumindest die Hälfte der bereits herausgefahrenen Steuerstäbe bei einer Schnellabschaltung wieder in den Reaktorkern eingefahren wird. Durch eine vollständige Entkopplung der den Abschaltgruppen zugeordneten Einfahrsysteme ist eine Beeinflussung eines funktionsfähigen Einfahrsystems durch ein ausgefallenes Einfahrsystem mit Sicherheit ausgeschlossen und damit die wünschenswerte Redundanz in vollem Umfang gegeben.

## Patentansprüche

1. Schnellabschaltsystem (1) eines Kernreaktors (2), welcher einen Reaktorkern (3) und eine Mehrzahl von Steuerstäben (4) hat, die nebeneinander angeordnet und in den Reaktorkern (3) ein- sowie aus dem Reaktorkern (3) ausfahrbar sind, wobei
a) die Mehrzahl von Steuerstäben (4) eine Anzahl von Fahrgruppen (5a,5b) hat, in die die Steuerstäbe (4) für eine Leistungsregulierung des Kernreaktors (2) eingeordnet,
b) die Mehrzahl von Steuerstäben (4) eine Anzahl von Abschaltgruppen (7a,7b) hat, in die die Steuerstäbe (4) für eine Schnellabschaltung des Kernreaktors (2) eingeordnet, und
c) jeder Abschaltgruppe (7a,7b) Steuerstäbe (4) von mindestens zwei Fahrgruppen (5a,5b) zugeordnet sind.

2. Schnellabschaltsystem (1) eines Kernreaktors (2), welcher einen Reaktorkern (3) und eine Mehrzahl von Steuerstäben (4) hat, die nebeneinander angeordnet und in den Reaktorkern (3) ein- sowie aus dem Reaktorkern (3) ausfahrbar sind, wobei
a) die Mehrzahl von Steuerstäben (4) eine Anzahl von Fahrgruppen (5a,5b) hat, in die die Steuerstäbe (4) für eine Leistungsregulierung des Kernreaktors (2) eingeordnet,
b) die Mehrzahl von Steuerstäben (4) eine Anzahl von Abschaltgruppen (7a,7b) hat, in die die Steuerstäbe (4) für eine Schnellabschaltung des Kernreaktors (2) eingeordnet, und
c) jeder Fahrgruppe (5a,5b) Steuerstäbe (4) von mindestens zwei Abschaltgruppen (7a,7b) zugeordnet sind.

3. Schnellabschaltsystem (1) nach einem der Ansprüche 1 oder 2, bei dem zumindest zwei voneinander unabhängige Einfahrsysteme (6a,6b) zum Einfahren der Steuerstäbe (4) in den Reaktorkern (3) vorgesehen und die Steuerstäbe (4) einer Abschaltgruppe (7a,7b) mit einem einzigen Einfahrsystem (6a,6b) verbunden sind.

4. Schnellabschaltsystem (1) nach einem der vorhergehenden Ansprüche, bei dem zwei Fahrgruppen (5a,5b) vorgesehen sind, deren Steuerstäbe (4) schachbrettartig zueinander angeordnet sind.

5. Schnellabschaltsystem (1) nach einem der vorhergehenden Ansprüche, bei dem zwei Abschaltgruppen (7a,7b) vorgesehen sind.

6. Schnellabschaltsystem (1) nach einem der vorhergehenden Ansprüche, bei dem jeder Abschaltgruppe (7a,7b) in etwa gleich viele Steuerstäbe (4) zugeordnet sind.

7. Schnellabschaltsystem (1) nach einem der vorhergehenden Ansprüche, bei dem jeder Abschaltgruppe (7a,7b) Paare (8) von nebeneinander angeordneten Steuerstäben (4) zugeordnet sind.

8. Schnellabschaltsystem (1) nach Anspruch 7, bei dem zwei Abschaltgruppen (7a,7b) vorgesehen sind, deren Paare (8) in etwa schachbrettartig zueinander angeordnet sind.

9. Schnellabschaltsystem (1) nach einem der vorhergehenden Ansprüche, bei dem die Steuerstäben (4) jeder Abschaltgruppe (7a,7b) weitgehend gleichmäßig über einem Querschnitt (9) des Reaktorkerns (3) verteilt sind.

10. Verfahren zur Schnellabschaltung eines Kernreaktors (2), welcher einen Reaktorkern (3) und eine Mehrzahl von Steuerstäben (4) hat, die nebeneinander angeordnet und in eine Anzahl von Fahrgruppen (5a,5b) aufgeteilt sind, gemäß derer während eines normalen Betriebs des Kernreaktors (3) die Steuerstäbe (4) in den Reaktorkern (3) hinein- und aus dem Reaktorkern (3) herausgefahren werden,
**dadurch gekennzeichnet**, daß in einer Störfallsituation zumindest zwei voneinander unabhängige Einfahrsysteme (6a,6b) zum Einfahren der Steuerstäbe (4) aktiviert werden, wobei die Steuerstäbe (4) in eine Anzahl von Abschaltgruppen (7a,7b) eingeordnet sind und jede Abschaltgruppe (7a,7b) Steuerstäbe aus mindestens zwei Fahrgruppen (5a,5b) hat sowie mit einem einzigen Einfahrsystem (6a,6b) verbunden ist.

## Claims

1. Fast shutdown system (1) of a nuclear reactor (2) which has a reactor core (3) and a plurality of control rods (4) which are arranged next to each other and can be inserted into the reactor core (3) and can be withdrawn from the reactor core (3), whereby
a) the plurality of control rods (4) has a number of travel groups (5a, 5b) into which the control rods (4) are arranged for power regulation of the nuclear reactor (2),
b) the plurality of control rods (4) has a number of shutdown groups (7a, 7b) into which the control rods (4) are arranged for a fast shutdown of the nuclear reactor (2), and
c) control rods (4) of at least two travel groups (5a, 5b) are allocated to each shutdown group (7a, 7b).

2. Fast shutdown system (1) of a nuclear reactor (2) which has a reactor core (3) and a plurality of control rods (4) which are arranged next to each other and can be inserted into the reactor core (3) and can be withdrawn from the reactor core (3), whereby
a) the plurality of control rods (4) has a number of travel groups (5a, 5b) into which the control rods (4) are arranged for power regulation of the nuclear reactor (2),
b) the plurality of control rods (4) has a number of shutdown groups (7a, 7b) into which the control rods (4) are arranged for a fast shutdown of the nuclear reactor (2), and
c) control rods (4) of at least two shutdown groups (7a, 7b) are allocated to each travel group (5a, 5b).

3. Fast shutdown system (1) according to one of claims 1 or 2, where at least two mutually independent insertion systems (6a, 6b) for inserting the control rods (4) into the reactor core (3) are provided, and the control rods (4) of a shutdown group (7a, 7b) are connected to a single insertion system (6a, 6b).

4. Fast shutdown system (1) according to one of the preceding claims, where two travel groups (5a, 5b) are provided, the control rods (4) of which are arranged in chessboard manner with respect to each other.

5. Fast shutdown system (1) according to one of the preceding claims, where two shutdown groups (7a, 7b) are provided.

6. Fast shutdown system (1) according to one of the preceding claims, where each shutdown group (7a, 7b) is allocated approximately the same number of control rods (4).

7. Fast shutdown system (1) according to one of the preceding claims, where each shutdown group (7a, 7b) is allocated pairs (8) of control rods (4) arranged next to each other.

8. Fast shutdown system (1) according to claim 7, where two shutdown groups (7a, 7b) are provided, the pairs (8) of which are arranged approximately in a chessboard manner with respect to each other.

9. Fast shutdown system (1) according to one of the preceding claims, where the control rods (4) of each shutdown group (7a, 7b) are distributed largely evenly over a cross section (9) of the reactor core (3).

10. Method for the fast shutdown of a nuclear reactor (2) which has a reactor core (3) and a plurality of control rods (4), which are arranged next to each other and are divided into a number of travel groups (5a, 5b), according to which, during normal operation of the nuclear reactor (3), the control rods (4) are inserted into the reactor core (3) and are withdrawn from the reactor core (3), characterized in that in a fault situation at least two mutually independent insertion systems (6a, 6b) for inserting the control rods (4) are activated, whereby the control rods (4) are arranged in a number of shutdown groups (7a, 7b) and each shutdown group (7a, 7b) has control rods from at least two travel groups (5a, 5b) and is connected to a single insertion system (6a, 6b).

## Revendications

1. Système (1) pour arrêter rapidement un réacteur (2) nucléaire, qui a un coeur (3) de réacteur et une pluralité de barres (4) de commande qui sont montées côte à côte et qui peuvent rentrées dans le coeur (3) du réacteur ainsi qu'être sorties du coeur (3) du réacteur,
a) la pluralité de barres (4) de commande ayant un certain nombre de groupes (5a, 5b) mobiles, dans lesquels les barres (4) de commande sont rangées pour une régulation de la puissance du réacteur (2) nucléaire,
b) la pluralité de barres (4) de commande ayant un certain nombre de groupes (7a, 7b) d'arrêt dans lesquels les barres (4) de commande sont rangées pour un arrêt rapide du réacteur (2) nucléaire, et
c) des barres (4) de commande d'au moins deux groupes (5a, 5b) mobiles étant associées à chaque groupe (7a, 7b) d'arrêt.

2. Système (1) pour arrêter rapidement un réacteur (2) nucléaire qui comporte un coeur (3) de réacteur et une pluralité de barres (4) de commande qui sont montées côte à côte et qui peuvent être rentrées dans le coeur (3) du racteur ainsi qu'être sorties du coeur (3) du réacteur,
a) la pluralité de barres (4) de commande ayant un certain nombre de groupes (5a, 5b) coulissants dans lesquels les barres (4) de commande sont rangées pour une régulation de la puissance du réacteur (2) nucléaire,
b) la pluralité de barres (4) de commande ayant un certain nombre de groupes (7a, 7b) d'arrêt dans lesquels les barres (4) de commande sont rangées pour un arrêt rapide du réacteur (2) nucléaire, et
c) des barres (4) de commande d'au moins deux groupes (7a, 7b) d'arrêt étant associées à chaque groupe (5a, 5b) mobile.

3. Système (1) d'arrêt rapide suivant l'une des revendications 1 ou 2. dans lequel au moins deux systèmes (6a, 6b) d'introduction indépendants l'un de l'autre sont prévus pour introduire les barres (4) de commande dans le coeur (3) du réacteur et dans lequel les barres (4) de commande d'un groupe (7a, 7b) d'arrêt sont reliées à un seul système (6a, 6b) d'introduction.

4. Système (1) d'arrêt rapide suivant l'une des revendications précédentes, dans lequel il est prévu deux groupes (5a, 5b) mobiles, dont les barres (4) de commande sont disposées en damier les unes par rapport aux autres.

5. Système (1) d'arrêt rapide suivant l'une des revendications précédentes, dans lequel il est prévu deux groupes (7a, 7b) d'arrêt.

6. Système (1) d'arrêt rapide suivant l'une des revendications précédentes, dans lequel un nombre de barres (4) de commande sensiblement identiques est associé à chaque groupe (7a, 7b) d'arrêt.

7. Système (1) d'arrêt rapide suivant l'une des revendications précédentes, dans lequel des paires (8) de barres (4) de commande montées côte à côte sont associées à chaque groupe (7a, 7b) d'arrêt.

8. Système (1) d'arrêt rapide suivant la revendication 7, dans lequel il est prévu deux groupes (7a, 7b) d'arrêt dont les paires (8) sont disposées à peu près en damier les unes par rapport aux autres.

9. Système (1) d'arrêt rapide suivant l'une des revendications précédentes, dans lequel les barres (4) de commande de chaque groupe (7a. 7b) d'arrêt sont réparties dans une grande mesure uniformément sur une section (9) transversale du coeur (3) du réacteur.

10. Procédé pour arrêter rapidement un réacteur (2) nucléaire qui a un coeur (3) de réacteur et une pluralité de barres (4) de commande qui sont disposées côte à côte et qui sont réparties en un certain nombre de groupes (5a, 5b) mobiles, dans lequel, pendant un fonctionnement normal du réacteur (3) nucléaire, les barres (4) de commande sont rentrées dans le coeur (3) du réacteur et sorties du coeur (3) du réacteur, caractérisé en ce que, lors d'une situation d'incident, au moins deux systèmes (6a, 6b) d'introduction indépendants l'un de l'autre sont activés pour introduire les barres (4) de commande, les barres (4) de commande étant rangées en un certain nombre de groupes (7a, 7b) d'arrêt et chaque groupe (7a, 7b) d'arrêt ayant des barres de commande d'au moins deux groupes (5a, 5b) mobiles et étant reliées à un système (6a, 6b) d'introduction unique.
